# EUROPEAN PATENT APPLICATION

(11) **EP 0 609 048 A1**
(43) Date of publication of application: **03.08.1994**
(21) Application number: 94300535.5
(22) Date of filing: 25.01.1994
(51) Int. Cl.: G09B 5/06, B42D 3/12

(54) **A Multi Media Book**

(30) Priority: 25.01.1993 AU 31993/93
(71) Applicant: TECTRON MANUFACTURING PTE LTD, Singapore 2573 (SG)
(72) Inventor: Cheong,Soon Seng Michael, S-2057 Singapore (SG); Cheung,Wing Keung, S-2057 Singapore (SG)
(74) Representative: Price, Nigel John King

(57) **Abstract**

A book has signal generation means responsive to opening of the book randomly to a page to generate a signal which is unique to that page. The signal may be an audio and/or visual signal which provides data indicative of information on that page.

## Description

The present invention relates to books and particularly, but not exclusively, to books that have a capacity to generate audible sound effects.

The printed page - in books, magazines, newspapers and the like - is arguably the most common medium for disseminating information in society. Obviously, a reader uses the faculty of sight to read a printed page. However, educators consider that learning is enhanced when a piece of information is received by more than one of the five senses - sight, hearing, smell, taste and touch. Therefore, when absorbing information that is presented visually, say in printed form, it is advantageous to have this information reinforced also by reference to others of the five senses, in particular - hearing.

The use of a combination of audio and visual material is a common learning technique. For example, material is available which use audio cassettes to provide the contents of the printed material in audible form. However, the user of the material is responsible for synchronizing the audio information with the printed information. For a given printed page, for instance, the user must locate the corresponding passage on the cassette tape, record, compact disc, or the like. The user is not able to open the printed material or book randomly to any page, and have the corresponding audio information recited automatically.

According to the present invention, there is provided a book comprising a page having a significator, another page having a significator, identification means responsive to the significators, and signal generation means responsive to said identification means, the arrangement being such that, when the book is opened randomly to said first-mentioned page, said identification means responds to the significator associated with that page by causing said signal generation means to emit a signal that is unique to said page, and when the book is opened randomly to said other page, said identification means responds to the significator associated with that page by causing said signal generation means to emit a signal that is unique to said other page.

The signal may be in audio and/or visual form which can be sensed directly by the reader. Alternatively, the signal can be used to actuate a remote or separate audio and/or visual source such as a tape or video player.

In one preferred embodiment of the present invention, said identification means comprises light sensors disposed on the book, and said significators comprise one or more apertures in the respective pages, each aperture being positionable proximate one of said light sensors, and the number of and/or position of the apertures in each respective page being unique to that page such that when the book is opened randomly to that page, light shines through the or each aperture associated with that page onto a selection of said light sensors, said selection being unique to that page whereby the selection of sensors causes said signal generation means to emit said signal that is unique to said page.

In another preferred embodiment of the present invention, said identification means comprises contact switches disposed on the book, and said significators comprise one or more projections at an edge margin of the respective pages, each of said projections being positionable proximate one of said switches, and the number and/or position of the projections associated with each respective page being unique to that page such that when the book is opened randomly to that page, the or each projection associated with that page abuts and actuates an adjacent contact switch, the selection of actuated contact switches being unique to that page whereby the selection of switches causes the signal generation means to emit said signal that is unique to said page.

Said signal may comprise sound, or it may comprise light signals. Said signal may also comprise words in vocalized audible form, especially when words are printed on the page.

Preferably, said signal generation means comprises an electronic circuit having a sound or voice chip.

In order that the present invention might be more fully understood, two embodiments of the invention will be described, by way of example only, with reference to the accompanying drawings, in which:
Figure 1 is a schematic diagram of a book constructed in accordance with a first embodiment of the invention, illustrated as it is opened to the end cover;
Figure 2 is an schematic representation showing the pages of the book of Figure 1, in exploded form, with regard to the inter-relationship of each of the apertures in the pages;
Figure 3 is a schematic diagram of the book of Figure 1, being opened instead to the last page;
Figure 4 is a schematic diagram of another book constructed in accordance with a second embodiment of the invention;
Figure 5 is an illustration, in exploded form, of a hinge with a projection, of the book of Figure 4;
Figure 6 is a cross-sectional view of the, book of Figure 4;
Figure 7 is an illustration showing the pages of the book of Figure 4, with regard for the arrangement of the projections; and
Figure 8 is a circuit diagram of the electronic circuit used in the exemplary embodiment of Figure 1.

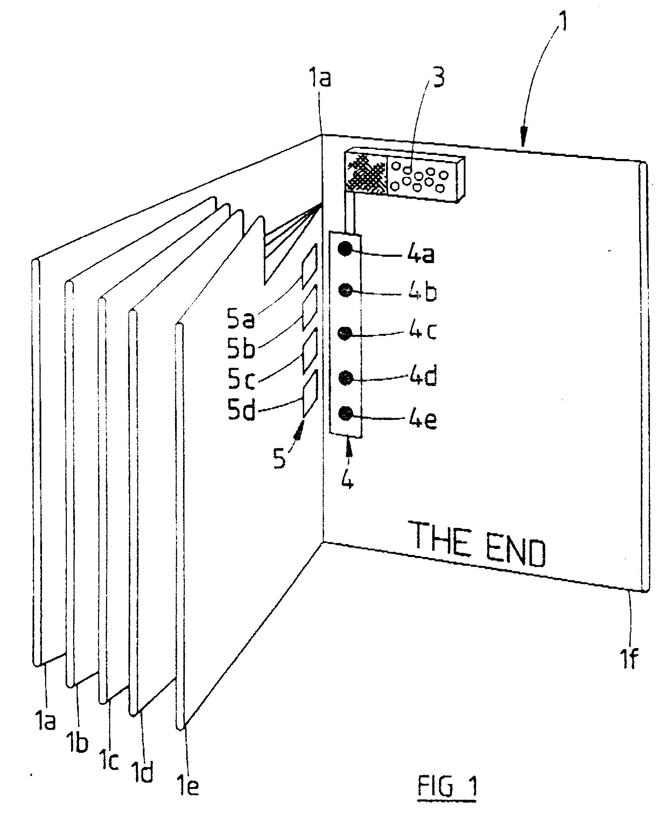

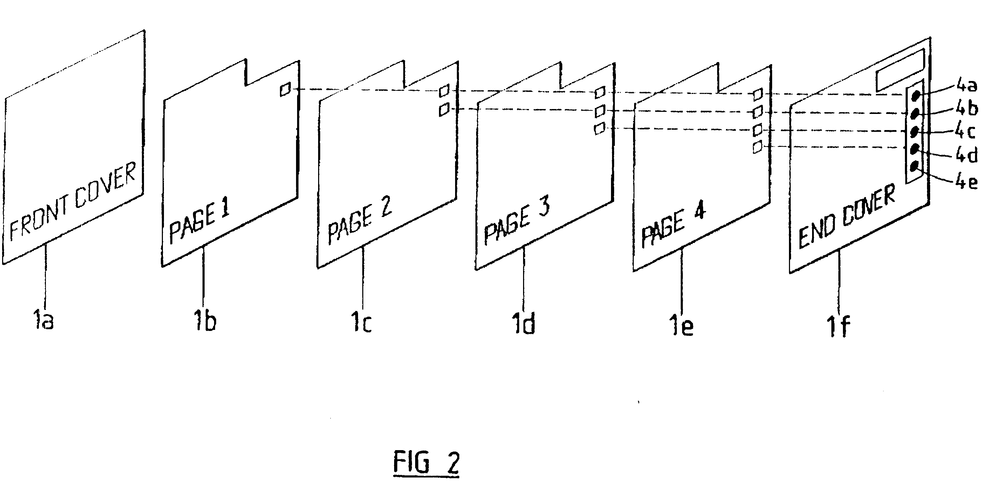

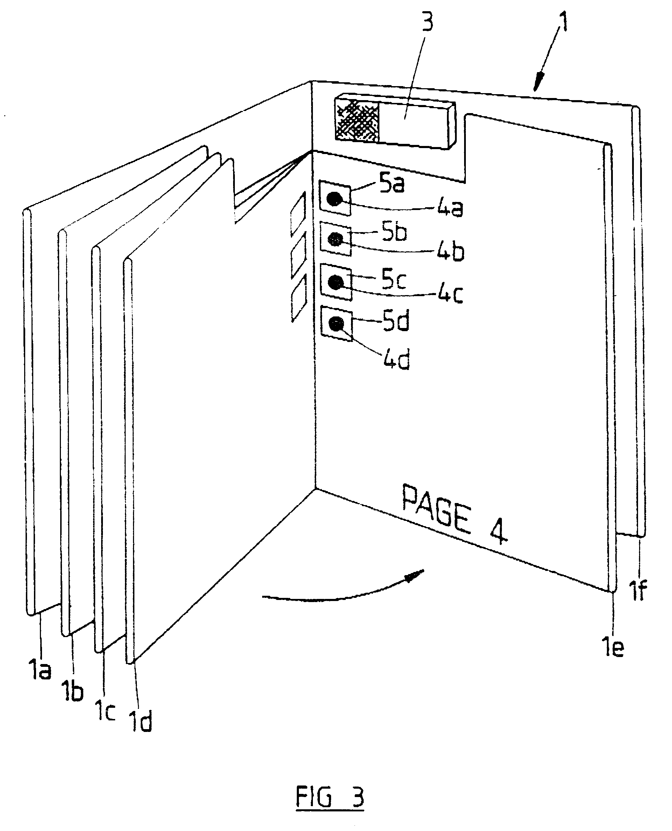

Referring to the drawings, Figure 1 is an illustration of a book 1 that is constructed in accordance with a first embodiment of the invention. The book has the capability of emitting a vocalized audible signal that corresponds to the words and/or illustrations on each of its pages. The book 1 includes a front cover 1a, a first page 1b, a second page 1c, a third page 1d, a fourth page 1e, and an end cover 1f, which are also illustrated in Figures 2 and 3.

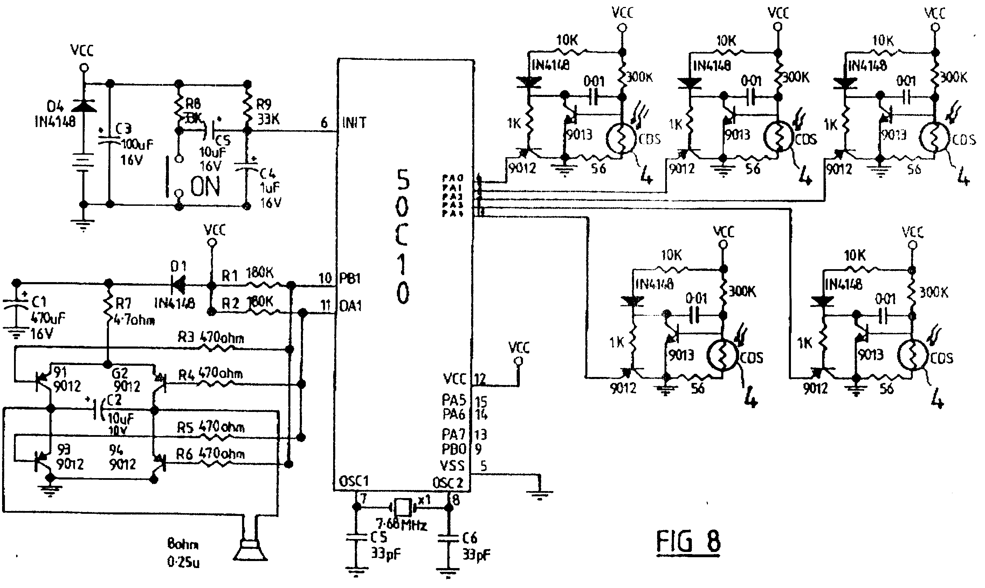

Attached to the end cover 1f is a signal generation means in the form of a voice synthesizer 3. A circuit diagram for the electronic circuit, used in voice synthesizer 3 of the first embodiment, is shown in Figure 8. The electronic circuit of the voice synthesizer comprises a voice synthesizing integrated circuit that is able to create and emit an output in the form of audible vocalized speech. The electronic circuit may be a known form of voice synthesizing circuitry, and the invention and embodiments thereof are not limited to a particular form of voice synthesizing electronic circuit.

Referring to Figure 1, the voice synthesizer 3 is electrically connected to identification means, in the form of a series of light sensitive photo sensors 4. Light sensitive electronic components, such as photo diodes, photo resistors, photo transistors or the like, may be used for the photo sensors of the embodiment. The photo sensors 4 are connected to the electronic circuit of the voice synthesizer 3. The photo sensors 4 are also attached to the end cover 1f of the book 1.

Photo sensors act as electronic "switches" for enabling and disabling the flow of electric current. When light, above a certain threshold, shines on the surface of a photo sensor, the photo sensor is then able to act as a conductor through which current may pass. Thus, when light of sufficient intensity shines on the surface of the photo sensors 4, electric current from a battery power source (not shown) is able to flow through the electronic circuit of the voice synthesizer 3, via the illuminated photo sensor. In this manner, only light of sufficient intensity, or above a certain threshold, will allow the voice synthesizer 3 to emit any audible output.

Each of the pages of the book 1, of the first embodiment, is provided with a significator in the form of one or more apertures 5. The permutation of the number of apertures, and the arrangement and spacing of the apertures for each page, differs from page to page. Hence, the number permutation and arrangement of the apertures of each page serves as a significator, whereby each page may be identified and distinguished from the other pages. For instance, in Figure 1, the significator of the fourth page le is in the form of four spaced apertures 5a, 5b, 5c and 5d. Referring to Figure 2, the third page 1d is provided with three apertures, the second page 1c with two apertures, and the first page 1a with one aperture.

The significator of each page is identified by identification means which, in the first embodiment, is in the form of five photo sensors 4a, 4b, 4c, 4d and 4e, that are attached to the end cover 1f, and are arranged in a vertical row. The row of photo sensors 4 are arranged in an orientation, such that each photo sensor is positionable proximate an aperture of the pages of the book 1. When the book is turned to a particular page, each aperture of the page is located over its corresponding photo sensor, when the page is positioned flat as against the end cover 1f. For example, in Figure 3, the book is opened to its fourth page le, with the page le positioned flat as against the end cover 1f: the apertures 5a, 5b, 5c, 5d of the page are positioned over the corresponding photo sensors 4a, 4b, 4c, 4d. It can be said, in a manner of speaking, that the photo sensors are responsive to the apertures, in that the arrangement of the apertures in each page determines whether light will shine on a particular photo cell. The apertures determine the electrical response of the photo cells when the book 1 is opened to each page.

Although the number permutation and/or arrangement of apertures of each page, differs from page to page, each individual aperture is oriented to correspond to one of the five photo sensors 4a, 4b, 4c, 4d, 4e. In Figure 1, for instance, each of the apertures 5 are positionable proximate one of the photo sensors 4. When the pages are opened (and when the book is closed), each of the apertures is positioned proximate its corresponding photo sensor. It is advantageous that the pages of the first embodiment are flat and do not curl excessively. Otherwise, when the book is open, the photo sensors would be exposed to more extraneous stray light entering from the edges of the pages. The pages of the book, in the first embodiment, are made of stiff paper or cardboard. However, in order to prevent excessive curl of the pages, the pages may be made also of any appropriate material, such as plastic materials, wood, vinyl, metal, or the like.

In the first embodiment, the photo sensors are positioned advantageously close to the spine 1a of the book 1, since in this location, there is less likelihood of stray light shining on the photo sensors when the book 1 is open to one of the pages. However, photo sensors may be positioned away from the book spine. In that instance, the photo sensors may receive more stray light, in which case, the photo sensors 4 may be calibrated to respond only at a higher levels of light intensity, to account for any stray light apart from that which shines through the apertures.

Figure 3 is an illustration of book 1 with it opened to its fourth page 1e, with that page turned towards the end cover 1f. Only four photo sensors 4a, 4b, 4c, 4d, out of the five photo sensors are uncovered. Light is therefore able to shine only through the four apertures 5a, 5b, 5c and 5d onto four photo sensors 4a, 4b, 4c and 4d. The fifth photo sensor 4e is covered because of the absence of a corresponding fifth aperture in the page. Referring again to Figure 2, it will be appreciated that when the book 1 is opened to the first page 1b, only one photo sensor 4a will be exposed to light. When the book 1 is opened to the second page 1c, only two photo sensors 4a, 4b will be exposed, and so forth.

Thus, for each page, a different selection of the photo sensors 4 is exposed to light. As a result, for each page, electric current flows through the voice synthesizer circuit, via a different photo sensor or combination thereof. This variation in the flow of electric current in the circuit, for each page, enables to electronic circuit to distinguish at which page the book 1 is opened, and a vocalized signal that is unique to the contents of opened page may be generated. For example, a user may open the book randomly at any page, and the voice synthesizer is able to "read" the page out loud. Or the signal may be in the form of music, noises or coloured light signals that are consistent with the contents of the particular page. The signal generation effects. In various embodiments, the signal generation means may emit sounds, words and light effects that correspond to the words or illustrations of each page.

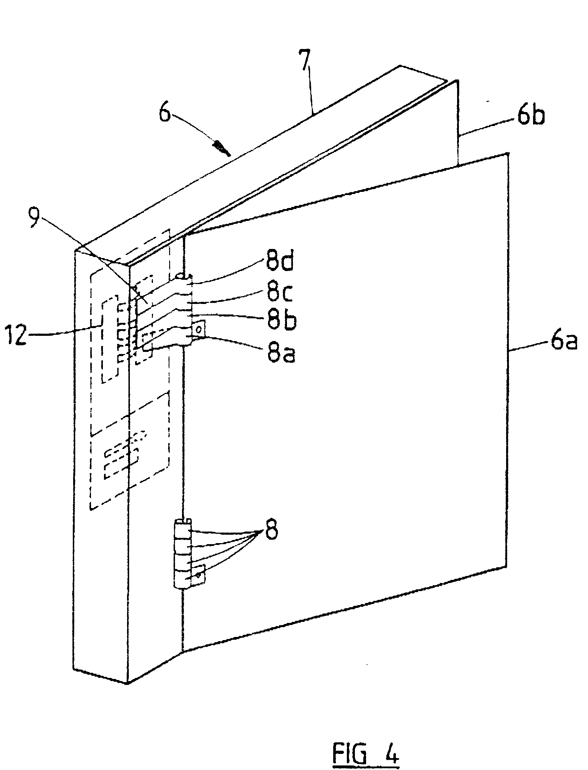

The invention is not restricted to the use of identification means in the form of photo electric light sensors. For example, Figure 4 is an illustration of a second embodiment of a book 6 that has the capability of emitting vocalized audible signals.

In this second embodiment, the book 6 is provided with signal generation means (not shown) that is similar to that of the first embodiment. However, the identification means is in the form of closeable electrical contact switches 12 attached to the book 6 proximate the book spine.

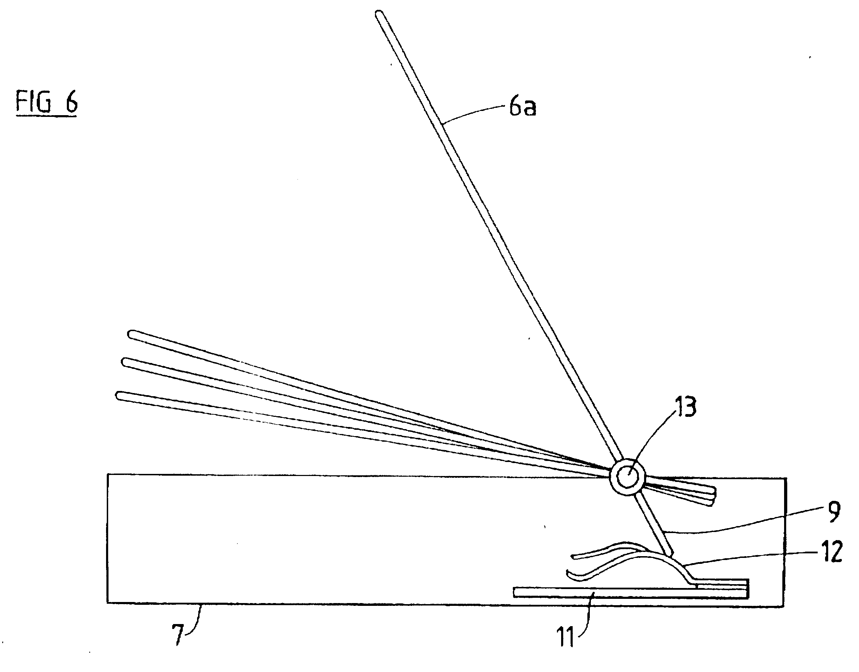

Referring to Figure 4, the book 6 comprises a book body 7. The pages are provided with hinges 8, 8a, 8b, 8c, 8d that are attached to the pages via tabs 10 which provided at an edge of each page. The pages are attached to the book body 7 via the hinges by an axle 13 (shown in Fig. 6) which passes through each hinge and is fixed within inner walls of the book body 7. The pages are thus able to swing or pivot about the axle 13, so that the pages may be turned.

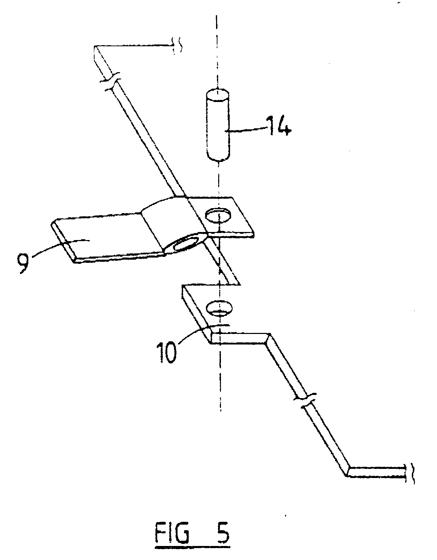

A number of the hinges 8a, 8b, 8c, 8d are provided with projections 9. In this second embodiment, each page is provided with a permutation and arrangement of the projections that differs from page to page. The number permutation and arrangement of the projections is able to serve as a significator that provides each page with a unique identity. The configuration of the projections 9 is illustrated in Figure 5 in exploded form. Projection 9 is attached to tab 10 by a eyelet 14.

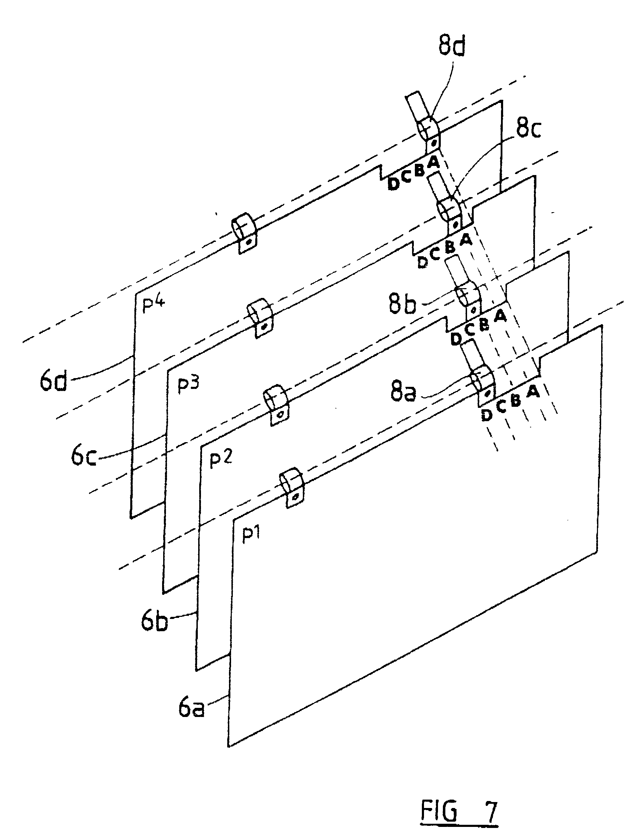

Each page may be identified and distinguished from the other pages by its unique configuration of its projections. For instance, in Figure 7, the significator of the first page 6a is in the form of a first projection 8a. In Figure 7, the projection of each succeeding page is fastened to the page, at a positioned that is displaced slightly from the position of the preceding page's projection. For instance, the projection 8b of the second page 6b is positioned to the right of the first projection 8a of the first page 6a, and so forth.

The significator of each page is identified by identification means which, in the second embodiment, is in the form of a row of the closeable contact switches 12 on a printed circuit board 11. The printed circuit board is located within the book body 7.

The row of contact switches 12 is arranged in an orientation, such that each contact switch is positioned proximate to one of the projection of the pages.

Referring to Figure 6, when a page, such as first page 6a, is turned and pivoted about axle 13, the projection 9 of the page also pivots about the axle, and eventually abuts its corresponding contact switch 12. When the book is opened to the page, the projection 9 urges the electrical contact downwardly until the contact switch 12 closes. This closure of the contact switch 12 enables a current to flow through the switch to the voice synthesizer.

For each page, a different selection of contact switches will be closed. As a result, for each page, a different part of the electric circuit is used to direct current to the voice synthesizer 3. This variation in current, for each page, enables to voice synthesizer circuit to distinguish at which page the book 6 is opened, and a vocalized signal that is unique to the contents of opened page may be generated. Since each electrical contact responds to a unique projection, or set of projections, on each page, the sound generation means will emit a signal unique to the opened page, even when the book is opened randomly.

An advantage of the books 1, 6 of the embodiments, is that a user may read the books, with the added benefit of hearing the words pronounced audibly. Absorption or learning of the information is enhanced because the user receives the information audibly, as well as visually. This would be advantageous for books that are intended for young children, and even for language students. The books 1,6 may act as an electronic learning aid for helping children and language students to receive the pronunciation of the words, without the assistance of an adult or teacher, as the case may be. The invention may, of course, be used in books of a more general nature.

There are conceivably many more variations of significators and identification means - mechanical, electrical or otherwise - that may be proposed to distinguish the identity of pages of a book. The embodiments have been advanced by way of example only, and modifications are possible within the spirit and scope of the invention as defined by the claims.

## Claims

1. A book comprising a page having a significator, another page having a significator, identification means responsive to the significators, and signal generation means responsive to said identification means, the arrangement being such that, when the book is opened randomly to said first-mentioned page, said identification means responds to the significator associated with that page by causing said signal generation means to emit a signal that is unique to said page, and when the book is opened randomly to said other page, said identification means responds to the significator associated with that page by causing said signal generation means to emit a signal that is unique to said other page.

2. A book according to claim 1, wherein said identification means comprises light sensors disposed on the book, and said significators comprise one or more apertures in the respective pages, each aperture being positionable proximate one of said light sensors, and the number of and/or position of the apertures in each respective page being unique to that page such that when the book is opened randomly to that page, light shines through the or each aperture associated with that page onto a selection of said light sensors, said selection being unique to that page whereby the selection of sensors caused said signal generation means to emit said signal that is unique to said page.

3. A book according to claim 1, wherein said identification means comprises contact switches disposed on the book, and said significators comprise one or more projections at an edge margin of the respective pages, each of said projections being positionable proximate one of said switches, and the number and/or position of the projections associated with each respective page being unique to that page such that when the book is opened randomly to that page, the or each projection associated with that page abuts and actuates an adjacent contact switch, the selection of actuated contact switches being unique to that page whereby the selection of switches causes the signal generation means to emit said signal that is unique to said page.
